# EUROPEAN PATENT SPECIFICATION

(11) **EP 0 558 848 B1**
(45) Date of publication and mention of the grant of the patent: **10.12.1997**
(21) Application number: 92308130.1
(22) Date of filing: 08.09.1992
(51) Int. Cl.: G11B 20/12, G11B 20/10

(54) **Recording medium and system for reproducing recorded information therefrom**
Aufzeichnungsmedium und System zur Wiedergabe aufgezeichneter Information
Support d'enregistrement et système de reproduction d'information enregistrée

(30) Priority: 03.03.1992 JP 45723/92
(43) Date of publication of application: 08.09.1993
(73) Proprietor: PIONEER VIDEO CORPORATION, Nakakoma-gun Yamanashi (JP); PIONEER ELECTRONIC CORPORATION, Meguro-ku Tokyo 153 (JP)
(72) Inventor: Itoh, Naoto, c/o Pioneer Video Corporation, Koufu-shi, Yamanashi (JP); Nomura, Satoru, c/o Pioneer Video Corporation, Koufu-shi, Yamanashi (JP); Ohta, Minemasa, c/o Pioneer Video Corporation, Koufu-shi, Yamanashi (JP)
(74) Representative: Tomlinson, Kerry John

(56) References cited:
- EP-A- 0 465 246
- WO-A-91/18345
- US-A- 4 001 883

## Description

The present invention relates to a recording medium on which multifarious types of digital information signals, such as audio data, video image data and computer data, are to be recorded, and a system for playing this recording medium to reproduce the recorded information.

Disks, such as CD (Compact Disk), CD-ROM and CD-I (Compact Disk-Interactive), are known as recording media for storage of digital information signals. CD, as is well known, is a recording medium on which audio signals are recorded as main information, while CD-ROM is a recording medium on which digital information signals which a computer handles are recorded on the audio signal recording area on a CD and which is used for storage of read-only computer data. Both CD and CD-ROM can construct a large-capacity memory system of 600 MB (megabytes) at a maximum.

A CD-I system is designed on the basis of this CD-ROM system and can interactively handle various types of digital information signals including audio data and video image data, such as a still picture, as well as computer data in accordance with applications. The CD-I system is designed for home use and educational purposes, and has specifications or the like for the range of what can be recorded on a disk and encoding determined in order to provide compatibility with various types of information. The aforementioned CD-I is a disk designed along this line.

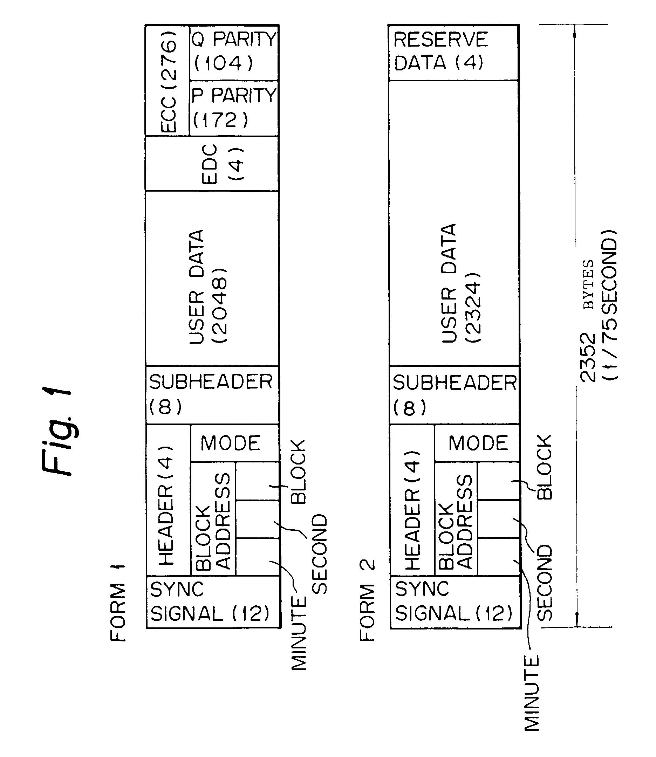

The data structure of the CD-I is specified in a standards book called the "green book", and is formed with information recording units called "blocks", as is the case for CD and CD-ROM. One block is equivalent to a time length of 1/75 second, and consists of 2352 bytes. The structure of one block will now be explained briefly. As shown in Fig. 1, four bytes following the first sync signal are a header where address information is recorded. Following the header is an 8-byte subheader where attribute data necessary to effect block-by-block time division of individual blocks in each of which only a single type of information signal, such as audio, video or computer data, is recorded, and to perform the processing in real time, is written twice. The attribute data consists of four items: the file number, channel number, submode and data type. Next to the subheader comes user data where a digital information signal is written. The user data consists of 2048 bytes in form 1, and 2324 bytes in form 2. Whether that block is in form 1 or form 2 is specified by a flag in the submode in the subheader. In form 1, a 4-byte error detection code (EDC) and a 276-byte error correction code (ECC) follows the user data. In form 2, a 4-byte reserve data comes after the user data.

On a conventional recording medium such as the above-described CD-I, however, blocks are recorded in a time-division multiplex manner, each block containing a single type of information signal. In other words, only that information signal whose type is recorded in an area indicating the type of information signal in one block, like the data type item of the subheader of a CD-I, occupies that block. If the amount of information of a to-be-recorded information signal at a time-dependent position varies at random, therefore, the assigned block may not be filled with a single type of a digital information signal. In such a case, the remaining area in that block should be filled with dummy data and another type of a digital information signal cannot be recorded there, lowering the use of efficiency of the recording medium.

EP-A-465246 describes a recording medium on which information is recorded in the form of blocks having a plurality of information subblocks. The preamble to claim 1 is based on this document.

It is therefore an object of the present invention to provide a recording medium which can allow different types of digital information signals to be recorded in one block to thereby improve the recording efficiency, and a system for reproducing recorded information from the same.

According to the present invention, there is provided a recording medium comprising a plurality of recording blocks in which digital information signals are recorded, each recording block comprising a plurality of information subblocks, characterized in that each recording block includes a subblock header which is located before said information subblocks and is divided into areas corresponding to said information subblocks, and each area of said subblock header contains identification data indicative of the type of digital information signal recorded in a corresponding information subblock, so that different types of digital information signals can be recorded in different information subblocks of each recording block.

Therefore, in the recording medium embodying the present invention, a plurality of subblocks in each of which a digital information signal is to be recorded are formed in each block, and the types of digital information signals for the associated subblocks are respectively recorded in a plurality of identification data blocks located preceding the subblocks in each block and respectively associated with the subblocks.

According to another aspect of the present invention, there is provided a recorded information reproducing system for a recording medium comprising a plurality of recording blocks in which digital information signals are recorded, each recording block comprising a plurality of information subblocks, each recording block including a subblock header which is located before said information subblocks and is divided into areas corresponding to said information subblocks, and each area of said subblock header containing identification data indicative of the type of digital information signal recorded in a corresponding information subblock, so that different types of digital information signals can be recorded in different information subblocks of each recording block, said system comprising: reading means for reading said digital information signal from said recording medium; a plurality of decoders for converting said digital information signal into an original information signal in accordance with a conversion mode corresponding to the type of said digital information signal; and identifying and distributing means for acquiring, block by block, identification data in said subblock headers from said digital information signal output from said reading means and distributing said digital information signal to one of said plurality of decoders subblock by subblock in accordance with the acquired identification data.

Therefore, in the recorded information reproducing system embodying the present invention, individual pieces of identification data in the header portion are discriminated from the digital information signal, read out from a recording medium by the reading means and output therefrom, block by block, and the digital information signal is distributed to one of a plurality of decoders subblock by subblock in accordance with the identification data to be converted into the original information signal.

A number of preferred embodiments of the present invention will now be described by way of example only, and with reference to the accompanying drawings, in which:
Fig. 1 is a diagram illustrating the physical format of one block of a CD-I;
Fig. 2 is a diagram showing the physical format of one block of a recording medium according to the present invention;
Fig. 3 is a block diagram illustrating the structure of a recorded information reproducing system according to the present invention; and
Figs. 4 and 5 are diagrams exemplifying the arrangement of subblocks of different types of information signals.

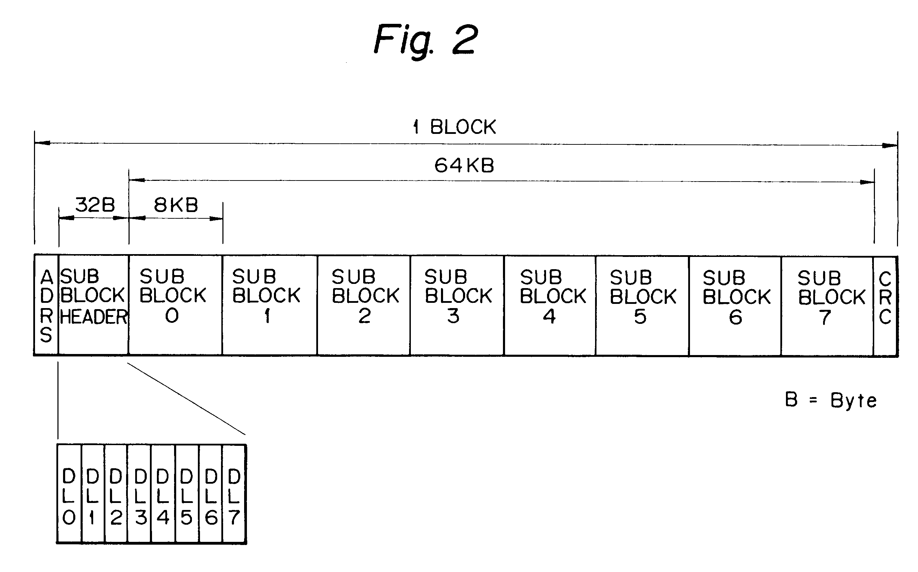

Fig. 2 illustrates the structure of one block of a recording medium embodying the present invention. One block consists of an address (ADRS), a subblock header (SUBBLOCK HEADER), eight subblocks (SUBBLOCK) 0 to 7 and an error detection code (CRC: Cyclic Redundancy Check). The address, the foremost element of one block, indicates the position of that block. The subblock header following the address consists of 32 bytes and indicates the types of information signals of the subblocks. The subblock header is therefore divided into eight areas where device labels (DL0 to DL7) as identification data indicating the types of the information signals of the associated subblocks are to be respectively described. The eight subblocks 0 to 7 follow the subblock header in order. The error detection code is located at the end of the block.

On the recording medium, blocks each having such a structure are repeatedly located in the order of their addresses along a track, with a sync signal (not shown in Fig. 2) inserted between consecutive blocks.

Given that the capacity of one subblock is 8 Kbytes, the total capacity of the eight subblocks 0 to 7 becomes 64 Kbytes, as shown in Fig. 2.

Each of the eight device labels (DL0 to DL7) defines a maximum of 256 types of devices with values of 00H to FFH (H indicates a hexadecimal notation). 00H to FFH may be previously determined as follows.

| | |
|---|---|
| 00H: NULL | |
| 01H: SYSTEM | 02H-0FH: RESERVED |
| 10H-13H: VIDEO CH1-CH4 | 14H-1FH: RESERVED |
| 20H-23H: AUDIO CH1-CH4 | 24H-2FH: RESERVED |
| 30H-33H: DATA CH1-CH4 | 34H-3FH: RESERVED |
| 40H-43H: SCSI CH1-CH4 | 44H-4FH: RESERVED |

NULL represents that the device has no significant meaning and is used when a dummy is necessary in a video image, a sound, data, etc.; the system need not read data from the associated subblock, thus ensuring an efficient operation. SYSTEM stores a control program or the like which is used by the system. VIDEO is a video signal, and AUDIO an audio signal. DATA is graphic data or MIDI (Musical Instrument Digital Interface) data, and SCSI (Small Computer System Interface) is an interface signal between a computer and a peripheral device. CH1 to CH4 indicate channel numbers, and RESERVED indicates that the associated subblock is reserved for an information signal which will be set in the future. If the device label DL0 is set as DL0: DEVICE LABEL = 10H, the information signal in the subblock 0 is a video signal of the first channel. With DL1: DEVICE LABEL = 21H, the information signal in the subblock 1 is an audio signal of the second channel.

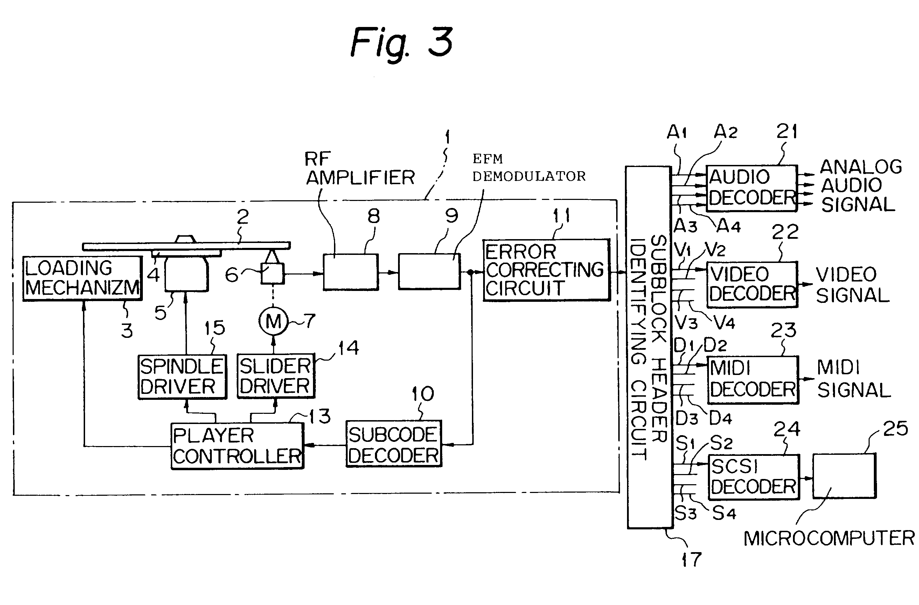

Fig. 3 illustrates a system for reproducing recorded information from a disk on which a digital information signal is recorded in the above-described format. In this recorded information reproducing system, a disk player 1 as reading means plays a disk 2 to output a digital reproduced signal. In this disk player 1, the disk 2 is placed on a turn table 4 by a loading mechanizm 3 and is rotated by a spindle motor 5. The recorded information signal on the disk 2 is read out by an optical pickup 6. The pickup 6 is mounted on a slider (not shown) which moves in the radial direction of the disk 2 when driven by a slider motor 7 as a drive source.

The output signal of the pickup 6 is an EFM (Eight to Fourteen Modulation) signal, for example, and this picked-up EFM signal is sent via an RF amplifier 8 to an EFM demodulator 9 where it is subjected to EFM demodulation. The resultant signal is then supplied to a subcode decoder 10 as well as to an error correcting circuit 11 for error correction. The subcode decoder 10 decodes subcode information such as the absolute time in the disk and frame number, and the decoded data is supplied to a player controller 13. The player controller 13, which is constituted of a microcomputer, performs positional control of the pickup 6 in the radial direction of the disk by driving the slider motor 7 via a slider driver 14, and control of the driving of the spindle motor 5 via a spindle driver 15, both under the control of the processor incorporated in the microcomputer. It is to be noted that a demodulating system other than the EFM may be used.

The output of the error correcting circuit 11 is connected to a subblock header identifying circuit 17. This circuit 17 identifies the contents of the individual device labels (DL0-DL7) in the subheader using, for example, a table and distributes the subblocks at the timing according to the sync signal for each block of the digital reproduced signal output from the error correcting circuit 11. The subblock header identifying circuit 17 has distribution output terminals, which include audio outputs A1-A4, video outputs V1-V4, data outputs D1-D4 and SCSI outputs S1-S4. For instance, the audio outputs A1-A4 are connected to a 4-channel audio decoder 21, the video output V1 to a video decoder 22, the data output D1 to a MIDI decoder 23, and the SCSI output S1 to a SCSI decoder 24, as shown in Fig. 3. The audio decoder 21 converts a digital audio signal into an analog audio signal for each channel and supplies it to an amplifier (not shown). The video decoder 22 converts a digital video signal into an analog video signal and supplies it to a display device (not shown). The MIDI decoder 23 converts digital data into data conforming to the MIDI standards, and supplies the data to a MIDI machine (not shown). The SCSI decoder 24 serves as an interface with a microcomputer 25.

When the subblock header identifying circuit 17 identifies the digital reproduced signal from the error correcting circuit 11 and when the content of the identified device label is DL0: DEVICE LABEL = 20H, the digital signal in the subblock 0 is supplied as a digital audio signal of the first channel to the audio decoder 21 from the audio output A1. When the content of the identified device label is DL1: DEVICE LABEL = 21H, the digital signal in the subblock 0 is supplied as a digital audio signal of the second channel to the audio decoder 21 from the audio output A2. If the normal mode is the case where the audio signal of the first channel is the audio signal of the left channel and the audio signal of the second channel is the audio signal of the right channel, the right and left channels are reversed by supplying DL0: DEVICE LABEL = 20H to the second channel and DL1: DEVICE LABEL = 21H to the first channel on the reproducing system side. If DL0: DEVICE LABEL = 20H and DL1: DEVICE LABEL = 20H, the audio signals of both right and left channels are supplied to the first channel input of the audio decoder 21, providing a monoral mode.

When the content of the identified device label is DL2: DEVICE LABEL = 10H, the digital signal in the subblock 2 is supplied as a digital video signal of the first channel to the video decoder 22 from the video output V1. When the content of the identified device label is DL3: DEVICE LABEL = 10H, the digital signal in the subblock 3 is supplied as a digital video signal of the first channel to the video decoder 22 also from the video output V1.

When the content of the identified device label is DL4: DEVICE LABEL = 30H, the digital signal in the subblock 4 is supplied to the MIDI decoder 23 from the data output D1. With DL5: DEVICE LABEL = 40H, the digital signal in the subblock 5 is supplied to the SCSI decoder 24 from the SCSI output S1. As a result, with the video image data of DL2 treated as the main channel and the video image data of DL3 as the subchannel, it is possible to carry out imposition, such as superimposed dialogues, mixture of images, partial image replacing, masking, etc. by setting DL3 on and off on the reproducing system side.

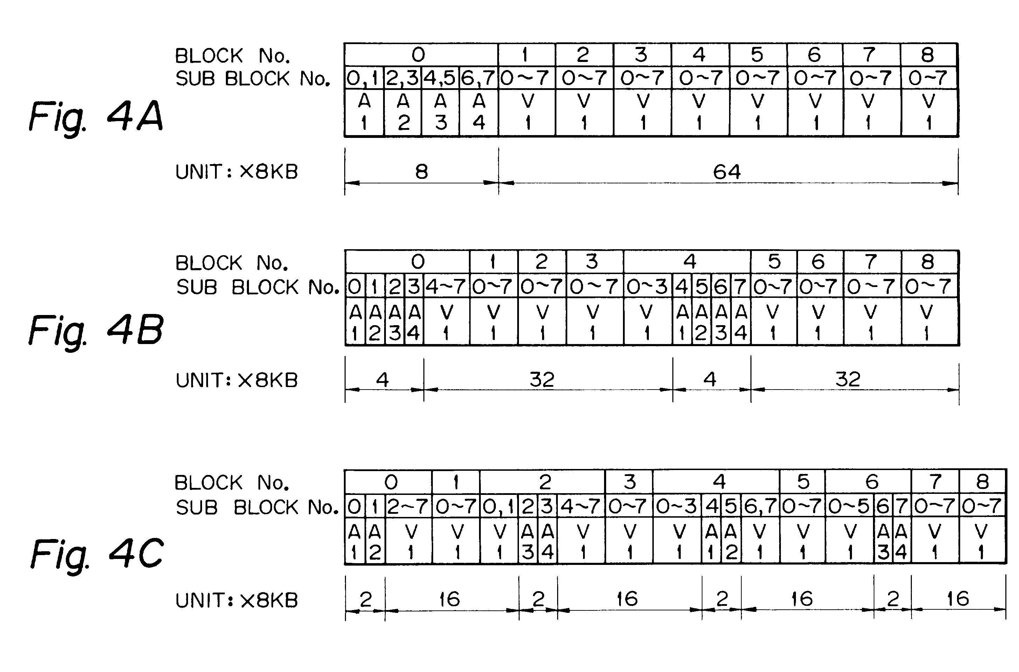

When an optical disk which can be played at the transfer rate of 4.7 Mbps is used as a recording medium, the digital reproduced signal is output at the rate of nine blocks per sec or 72 subblocks per sec. If one block is assigned to a 4-channel audio signal and eight blocks are assigned to a 1-channel video signal on this optical disk, the transfer rate of the audio signal becomes 0.5 Mbps (4 × 128 Kbps) and the transfer rate of the video signal becomes 4.2 Mbps. Fig. 4 exemplifies the arrangements of the individual audio signals and video signals of the subblocks in this case.

The arrangement of Fig. 4A is the format in which a 4-channel audio signal is assigned to one block with two subblocks provided per channel, and video signals are assigned to the subsequent eight blocks. In this case, nine blocks consisting of audio and video signals are repeated every second (30 frames). The arrangement of Fig. 4B is the format which allows a group of information signals including audio and video signals to be repeated in half the subblocks involved in the arrangement of Fig. 4A and in which a 4-channel audio signal is assigned to four subblocks in one block with one subblock provided per channel, and video signals are assigned to the subsequent four subblocks in that block and to the subsequent four blocks. This format corresponds one to one to the GOP (Group of Picture) structure of MPEG (Moving Picture Expert Group) and is advantageous for random access. The arrangement of Fig. 4C is designed to allow a group of information signals including audio and video signals to be repeated in half the subblocks involved in the arrangement of Fig. 4B.

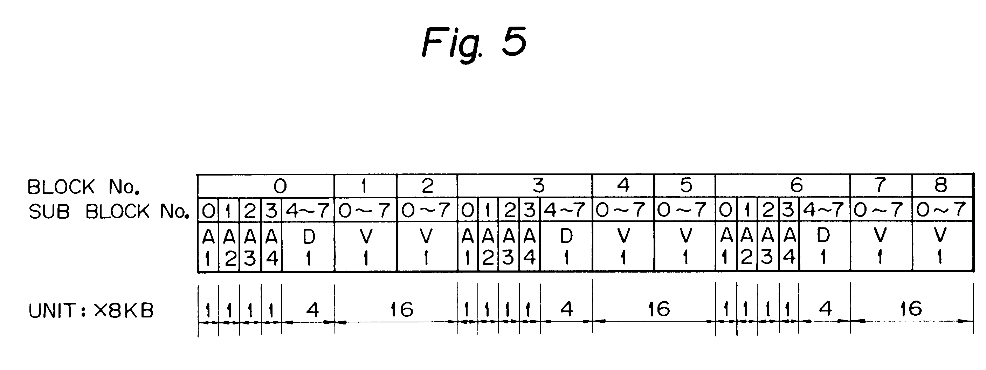

Further, besides digital information signals such as audio and video signals, information signals, such as a system program, character information and MIDI data, can be recorded on the recording medium. For instance, computer data D1 may be recorded together with a 4-channel audio signal and a 1-channel video signal as shown in Fig. 5.

Although the subblock header identifying circuit 17 is provided with distribution output terminals for four channels, namely the audio outputs A1-A4, video outputs V1-V4, data outputs D1-D4 and SCSI outputs S1-S4, in the above-described embodiment, the number of channels is not limited to four and the circuit 17 may be designed to handle more channels.

Further, although the recording medium has been described as a disk in the foregoing description, it is in no way limited to this particular type, but the present invention may be adapted for other types of recording media such as a tape and a card.

In short, according to the recording medium embodying the present invention, a plurality of subblocks in each of which a digital information signal is to be recorded are formed in each block, and the types of digital information signals for the associated subblocks are respectively recorded in a plurality of identification data blocks located preceding to the subblocks in one block and respectively associated with the subblocks, so that different types of digital information signals can be recorded in one block. In the case where the amount of one type of digital information in one block at a given time-dependent position is small and all the subblocks thus need not be used, other types of digital information signals can be recorded in the remaining subblocks, thus improving the use efficiency of the recording medium.

According to the recorded information reproducing system embodying the present invention, individual pieces of identification data in the subblock header are discriminated from the digital information signal output from the player, block by block, and the digital information signal is distributed to one of a plurality of decoders subblock by subblock in accordance with the identification data. Even if the recording medium in use has different types of digital information signals recorded in one block, the recorded digital information signals can properly be converted into the original information signals.

## Claims

1. A recording medium (2) comprising a plurality of recording blocks in which digital information signals are recorded, each recording block comprising a plurality of information subblocks, characterized in that
each recording block includes a subblock header which is located before said information subblocks and is divided into areas corresponding to said information subblocks, and each area of said subblock header contains identification data indicative of the type of digital information signal recorded in a corresponding information subblock, so that different types of digital information signals can be recorded in different information subblocks of each recording block.

2. A recorded information reproducing system for a recording medium (2) comprising a plurality of recording blocks in which digital information signals are recorded, each recording block comprising a plurality of information subblocks, each recording block including a subblock header which is located before said information subblocks and is divided into areas corresponding to said information subblocks, and each area of said subblock header containing identification data indicative of the type of digital information signal recorded in a corresponding information subblock, so that different types of digital information signals can be recorded in different information subblocks of each recording block, said system comprising:
reading means (6) for reading said digital information signal from said recording medium;
a plurality of decoders (21, 22, 23, 24) for converting said digital information signal into an original information signal in accordance with a conversion mode corresponding to the type of said digital information signal; and
identifying and distributing means (8, 9, 10, 11) for acquiring, block by block, identification data in said subblock headers from said digital information signal output from said reading means and distributing said digital information signal to one of said plurality of decoders subblock by subblock in accordance with the acquired identification data.

## Patentansprüche

1. Ein Aufzeichnungsmedium (2) beinhaltend eine Vielzahl von Aufzeichnungsblöcken, in denen digitale Informationssignale aufgezeichnet werden, wobei jeder Aufzeichnungsblock eine Vielzahl von Informations-Unterblöcken beinhaltet, dadurch gekennzeichnet, daß jeder Aufzeichnungsblock einen Unterblockkopf beinhaltet, der sich vor diesen Informations-Unterblöcken befindet und in Bereiche entsprechend diesen Informations-Unterblöcken aufgeteilt ist, und jeder Bereich dieses Unterblockkopfs Identifikationsdaten beinhaltet, die die Art des digitalen Informationssignals anzeigen, das in dem entsprechenden Informationsunterblock aufgezeichnet ist, so daß verschiedene Arten von digitalen Informationssignalen in verschiedenen Informationsunterblöcken jedes Aufzeichnungsblocks aufgezeichnet werden können.

2. Ein System zur Wiedergabe aufgezeichneter Informationen für ein Aufzeichnungsmedium (2), beinhaltend eine Vielzahl von Aufzeichnungsblöcken, in denen digitale Informationssignale aufgezeichnet sind, wobei jeder Aufzeichnungsblock eine Vielzahl von Informationsunterblöcken enthält und jeder Aufzeichnungsblock einen Unterblockkopf beinhaltet, der vor diesen Informationsunterblöcken angeordnet ist, in Bereiche entsprechend diesen Informationsunterblöcken aufgeteilt ist, und jeder Bereich dieses Unterblockkopfs Identifikationsdaten enthält, die die Art der in einem entsprechenden Informationsunterblock aufgezeichneten digitalen Informationssignale anzeigen, so daß verschiedene Arten digitaler Informationssignale in verschiedenen Informationsunterblöcken jedes Aufzeichnungsblocks aufgezeichnet werden können, wobei dieses System beinhaltet:
Lesemittel (6) zum Lesen der digitalen Informationssignale aus diesem Aufzeichnungsmedium;
eine Vielzahl von Decodierern (21, 22, 23, 24) zum Wandeln der digitalen Informationssignale in ein Original-Informationssignal in Übereinstimmung mit einem Wandlermodus entsprechend der Art des digitalen Informationssignals; und
Identifizierungs- und Verteilermittel (8, 9, 10, 11) zur Erfassung von Identifikationsdaten in den Unterblockköpfen, Block für Block, von dem digitalen Informationssignalausgang von dem Lesemittel und Verteilen des digitalen Informationssignals an einen aus dieser Vielzahl von Decodierern Unterblock für Unterblock, in Übereinstimmung mit den erfaßten Identifikationsdaten.

## Revendications

1. Support d'enregistrement (2) comprenant une pluralité d'ensembles d'enregistrement dans lesquels des signaux numériques d'information sont enregistrés, chaque ensemble d'enregistrement comprenant une pluralité de sous-ensembles d'information,
caractérisé en ce que chaque ensemble d'enregistrement comporte un en-tête de sous-ensemble placé avant les sous-ensembles d'information, et divisé en zones qui correspondent auxdits sous-ensembles d'information, chaque zone de l'en-tête de sous-ensemble contenant des données d'identification qui indiquent le type de signal numérique d'information enregistré dans un sous-ensemble d'information correspondant, différents types de signaux numériques d'information pouvant ainsi être enregistrés dans différents sous-ensembles d'information de chaque ensemble d'enregistrement.

2. Système de reproduction d'informations enregistrées prévu pour un support d'enregistrement (2), ce système comprenant une pluralité d'ensembles d'enregistrement dans lesquels des signaux numériques d'information sont enregistrés, chaque ensemble d'enregistrement comportant un en-tête de sous-ensemble placé avant les sous-ensembles d'information, et divisé en zones qui correspondent auxdits sous-ensembles d'information, chaque zone de l'en-tête de sous-ensemble contenant des données d'identification qui indiquent le type de signal numérique d'information enregistré dans un sous-ensemble d'information correspondant, différents types de signaux numériques d'information pouvant ainsi être enregistrés dans différents sous-ensembles d'information de chaque ensemble d'enregistrement, ledit système comprenant :
des moyens de lecture (6) pour extraire ledit signal numérique d'information du support d'enregistrement ;
une pluralité de décodeurs (21, 22, 23, 24) pour convertir ledit signal numérique d'information en un signal original d'information selon un mode de conversion qui correspond au type dudit signal numérique d'information ; et
des moyens d'identification et de distribution (8, 9, 10, 11) pour l'acquisition, ensemble par ensemble, de données d'identification dans les en-têtes de sous-ensembles à partir de la sortie du signal numérique d'information des moyens de lecture, et pour la distribution, sous-ensemble par sous-ensemble, dudit signal numérique d'information vers l'un de la pluralité de décodeurs, en conformité avec les données d'identification acquises.
